# EUROPEAN PATENT SPECIFICATION

(11) **EP 3 875 628 B1**
(45) Date of publication and mention of the grant of the patent: **28.01.2026**
(21) Application number: 19878062.9
(22) Date of filing: 18.10.2019
(51) Int. Cl.: C22C 38/38, C22C 38/22, C22C 38/02, C22C 38/06, C22C 38/04, C22C 38/00, C21D 8/02, C21D 1/32, C21D 6/00, C21D 8/06, C21D 9/573, C21D 9/64

(54) **STEEL WIRE ROD ENABLING OMISSION OF SOFTENING HEAT TREATMENT AND METHOD OF MANUFACTURING SAME**
STAHLDRAHTSTAB DER EINE WEICHGLÜHBEHANDLUNG ÜBERFLÜSSIG MACHT UND VERFAHREN ZUR HERSTELLUNG DAVON
TIGE DE FIL D'ACIER PERMETTANT L'OMISSION D'UN TRAITEMENT THERMIQUE DE RAMOLLISSEMENT ET PROCÉDÉ POUR LA FABRIQUER

(30) Priority: 31.10.2018 KR 20180132073
(43) Date of publication of application: 08.09.2021
(73) Proprietor: POSCO Co., Ltd, Pohang-si, Gyeongsangbuk-do 37859 (KR)
(72) Inventor: LEE, Jae-Seung, Pohang-si, Gyeongsangbuk-do 37877 (KR); YANG, Yo-Sep, Pohang-si, Gyeongsangbuk-do 37877 (KR); PARK, In-Gyu, Pohang-si, Gyeongsangbuk-do 37877 (KR); KIM, Han-Hwi, Pohang-si, Gyeongsangbuk-do 37877 (KR)
(74) Representative: Meissner Bolte Partnerschaft mbB
(86) International application number: PCT/KR2019/013702
(87) International publication number: WO 2020/091277

(56) References cited:
- EP-A1- 3 342 892
- CN-A- 106 636 883
- JP-A- 2000 119 809
- JP-A- 2000 119 809
- JP-A- 2001 089 830
- KR-A- 20110 033 534
- KR-A- 20140 139 020
- KR-A- 20200 075 305
- US-A1- 2003 015 264

## Description

### [Technical Field]

The present disclosure relates to a steel wire rod enabling the omission of a softening heat treatment and a method of manufacturing the same, and more particularly, a steel wire rod used for a mechanical structure which may be applicable to vehicles, construction components, and the like, and a method of manufacturing the same.

### [Background Art]

Generally, for softening of a material for cold processing, a lengthy heat treatment of 10 to 20 hours or more at a high temperature of 600-800°C may be required, and many techniques have been developed to shorten or omit the treatment.

Reference 1 may be a representative technique. The purpose of the above technique is to, by refining grains by controlling a ferrite grain size to be 11 or more and controlling 3-15% of a hard plate-shaped cementite phase in a pearlite structure to have a segmented form, omit a softening heat treatment subsequently performed. However, to manufacture such a material, a cooling rate in cooling after hot-rolling may need to be extremely low, 0.02-0.3°C/s. The slow cooling rate may be accompanied by a decrease in productivity, and a separate slow cooling facility and a slow cooling yard may be necessary depending on an environment.

### [Prior Art Document]

(Reference 1) Japanese Laid-Open Patent Publication No. 2000-336456

### [Disclosure]

### [Technical Problem]

One aspect of the present invention is to provide a steel wire rod enabling the omission of a softening heat treatment in cold processing of vehicles, construction components, and the like, and a method of manufacturing the same.

### [Technical Solution]

The present invention is defined by the independent claims. Advantageous embodiments are described in dependent claims.

### [Advantageous Effects]

According to one aspect of the present invention, a steel wire rod enabling the omission of a softening heat treatment in cold processing of vehicles, construction components, and the like, and a method of manufacturing same may be provided

### [Brief Description of Drawings]

FIG. 1 is an image of a microstructure before finishing hot-rolling in comparative example 1, obtained using an optical microscope;
FIG. 2 is an image of a microstructure before finishing hot-rolling in inventive example 1, obtained using an optical microscope;
FIG. 3 is an image of a microstructure after rolling and cooling in comparative example 1, obtained using an SEM;
FIG. 4 is an image of a microstructure after rolling and cooling in inventive example 1, obtained using an SEM;
FIG. 5 is an image of a microstructure after a spheroidizing heat treatment in comparative example 1, obtained using an SEM; and
FIG. 6 is an image of a microstructure after a spheroidizing heat treatment in inventive example 1, obtained using an SEM.

### [Best Mode for Invention]

In the description below, a steel wire rod having excellent spheroidizing heat treatment properties according to an embodiment of the present invention will be described.
First, an alloy composition of the present disclosure will be described. The content of the alloy composition described below is represented by weight% unless otherwise indicated.

### C: 0.2-0.45%

C is added to secure a certain level of strength. When the content of C exceeds 0.45%, the entire structure may be formed of pearlite, such that it may be difficult to secure a ferrite structure, the purpose of the present disclosure, and hardenability may excessively increase such that it may be highly likely that a hard low-temperature transformation structure may be formed. When the content is less than 0.2%, strength of a base material may degrade such that it may be difficult to secure sufficient strength after hardening and tempering heat treatment performed after softening heat treatment and a forging process. Therefore, the content of C has a range of 0.2-0.45%.
A lower limit of the C content may be more preferably 0.22%, even more preferably 0.24%, and most preferably 0.26%. An upper limit of the C content may be more preferably 0.43%, even more preferably 0.41%, and most preferably 0.39%.

### Si: 0.02-0.4%

Si is a representative substitutional element and is added to secure a certain level of strength. When Si is less than 0.02%, it may be difficult to secure strength of steel and sufficient hardenability, and when C exceeds 0.4%, cold forging properties may be deteriorated during forging after softening heat treatment, which may be disadvantageous. Therefore, the Si content has a range of 0.02-0.4%. A lower limit of the Si content may be more preferably 0.022%, even more preferably 0.024%, and most preferably 0.026%. An upper limit of the Si content may be more preferably 0.038%, even more preferably 0.036%, and most preferably 0.034%.

### Mn: 0.3-1.5%

Mn forms a substituted solid solution in a matrix structure, and may lower a temperature A1 such that Mn may refine an interlayer spacing of pearlite, and Mn may increase sub-crystal grains in a ferrite structure. When Mn exceeds 1.5%, a harmful effect may occur by structure heterogeneity caused by manganese segregation. When steel is solidified, macrosegregation and microsegregation may be likely to occur depending on a segregation mechanism, and Mn may promote segregation due to a relatively low diffusion coefficient compared to other elements, and improvement of hardenability caused by this may be a main cause of creating a low-temperature structure like martensite in the central region. When the Mn is less than 0.3%, it may be difficult to secure sufficient hardenability to secure a martensite structure after hardening and tempering heat treatment performed after the softening heat treatment and a forging process. Therefore, the content of Mn has a range of 0.3-1.5%.
A lower limit of the Mn content may be more preferably 0.4%, even more preferably 0.5%, and most preferably 0.6%. An upper limit of the Mn content may be more preferably 1.4%, even more preferably 1.3%, and most preferably 1.2%.

### Cr: 0.01-1.5%

Similarly to Mn, Cr is mainly used as an element for enhancing hardenability of steel. When Cr is less than 0.01%, it may be difficult to secure sufficient hardenability to obtain martensite during hardening and tempering heat treatment performed after softening heat treatment and a forging processes, and when Cr exceeds 1.5%, central segregation may be promoted such that it may be highly likely that low-temperature structure may be formed in the steel wire rod. Therefore, the content of Cr has a range of 0.01-1.5%. A lower limit of the Cr content may be more preferably 0.1%, even more preferably 0.3%, and most preferably 0.5%. An upper limit of the Cr content may be more preferably 1.4%, even more preferably 1.3%, and most preferably 1.2%.

### Al: 0.02-0.05%

Al has a deoxidation effect, and may precipitate Al-based carbonitride such that austenite grain growth may be inhibited and a fraction of proeutectoid ferrite may be secured close to an equilibrium phase. When Al is less than 0.02%, the deoxidation effect may be not sufficient, and when Al exceeds 0.05%, hard inclusions such as Al₂O₃ may increase, and in particular, nozzle clogging may occur due to the inclusions during continuous casting. Therefore, the Al content has a range of 0.02-0.05%.
A lower limit of the Al content may be more preferably 0.022%, even more preferably 0.024%, and most preferably 0.026%. An upper limit of the Al content may be more preferably 0.048%, even more preferably 0.046%, and most preferably 0.044%.

### Mo: 0.01-0.5%

Mo may precipitate Mo-based carbonitrides such that Mo may inhibit austenite grain growth, and may contribute to securing a fraction of proeutectoid ferrite close to an equilibrium phase, and Mo may form Mo₂C precipitates during tempering in a hardening and tempering heat treatment performed after a softening heat treatment and forging process, such that Mo may be effective in inhibiting strength degradation (temper softening). When Mo is less than 0.01%, it may be difficult to have a sufficient effect of inhibiting strength degradation, and when Mo exceeds 0.5%, a low-temperature structure may be formed in the steel wire rod, such that additional heat treatment costs for removing the low-temperature structure may be necessary. Therefore, Mo has a range of 0.01-0.5%. A lower limit of the Mo content may be more preferably 0.012%, even more preferably 0.013%, and most preferably 0.014. An upper limit of the Mo content may be more preferably 0.49%, even more preferably 0.48%, and most preferably 0.47%.

### N: 0.01% or less

N may be one of impurities, and when N exceeds 0.01%, material toughness and ductility may be deteriorated due to solid solute nitrogen not combined as a precipitate. Therefore, the content of N has a range of 0.01% or less. The N content may be more preferably 0.019% or less, even more preferably 0.018% or less, and most preferably 0.017% or less.

A remainder of the present disclosure may be iron (Fe). However, in a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

A microstructure of the steel wire rod of the present invention is a composite structure of proeutectoid ferrite+pearlite. Simply in terms of spheroidization of steel, bainite steel with fine cementite may be advantageous, but it has been reported that cementite spheroidized from bainite may be extremely fine such that growth thereof may be extremely slow. Thus, a ferrite+pearlite+bainite composite structure may be disadvantageous in terms of structure homogenization. Therefore, in the present disclosure, by controlling the microstructure of the steel wire rod to be a composite structure of proeutectoid ferrite+pearlite, spheroidizing heat treatment properties may improve, and also the structure may be further homogenized. According to the present invention, a fraction of proeutectoid ferrite is 80% or more of an equilibrium phase, and when the fraction is less than 80% of an equilibrium phase, a relatively hard low-temperature structure may be formed in a large amount such that it may be difficult to effectively secure a spheroidization heat treatment properties. However, in the present invention, a low-temperature structure which may inevitably be formed during manufacturing, one or more of bainite or martensite, may be included by 10 area% or less. Thus, a microstructure according to the present invention is a composite structure in which a main phase may be ferrite+pearlite, and may include 10 area% or less (including 0%) of one or more of bainite or martensite. Preferably, a fraction of one or more of bainite or martensite may be 5 area% or less. An equilibrium phase of proeutectoid ferrite may refer to a maximum fraction of proeutectoid ferrite which may be included in a stable state on a Fe₃C phase diagram. The equilibrium phase of proeutectoid ferrite may be easily derived by a person skilled in the art in consideration of the C content and the content of the other alloy elements through the Fe₃C phase diagram.

According to the present invention, an average size of a colony of pearlite is 5 µm or less. By controlling an average size of pearlite colonies to be fine as described above, the effect of segmentation of cementite may improve, such that a spheroidization rate of cementite may increase during spheroidization heat treatment.

Also, preferably, an average grain size of proeutectoid ferrite may be 7 µm or less. As described above, by controlling the average grain size of ferrite to be fine, the size of pearlite colonies may also be refined, and accordingly, a spheroidization rate of cementite may increase during spheroidization heat treatment.

Also, preferably, an average size of a long axis of cementite in the pearlite colony may be 5 µm or less. As described above, by controlling the average size of the long axis of cementite in the pearlite colony to be small, that is, by controlling a cementite aspect ratio to be small, a spheroidization rate of cementite during spheroidization heat treatment may increase.

In the present disclosure, the average size of the pearlite colony, the average grain size of the proeutectoid ferrite, and the average size of the long axis of cementite in the pearlite colony may be of a central portion with reference to a diameter of the steel wire rod, that is, 2/5 point-3/5 point from the surface with reference to the diameter. Generally, since a surface layer of the steel rod wire may receive strong rolling force during rolling, the average size of colonies of pearlite, the average grain size of proeutectoid ferrite, and the average size of the long axis of cementite in the pearlite colony may be fine. However, in the present disclosure, by refining the average colony size of pearlite and the average grain size of ferrite on the surface layer of the steel wire rod and also in the central portion, the rate of spheroidization of cementite may effectively increase during spheroidization heat treatment.

The steel wire rod provided in the present disclosure may have tensile strength of 800 MPa or less. Generally, to manufacture a steel wire rod into a steel wire, a primary softening heat treatment → primary wire drawing → a secondary softening heat treatment → secondary wire drawing may be performed. However, as for the steel wire rod of the present disclosure, processes corresponding to the primary soft softening heat treatment and the primary wire drawing may be omitted through sufficient softening of the material. The softening heat treatment in the present disclosure may include a low-temperature annealing heat treatment performed below an Ae1 phase transformation point, a medium temperature annealing heat treatment performed at around Ae1, and a spheroidizing annealing heat treatment performed above Ae1.

Also, the steel wire rod of the present invention may have an average aspect ratio of cementite of 2.5 or less after spheroidizing annealing heat treatment is performed once. Generally, it is widely known that the spheroidizing annealing heat treatment may be effective in spheroidizing of cementite as the number of performing the treatment increases. However, in the present disclosure, cementite may be sufficiently spheroidized by only performing the spheroidizing annealing heat treatment once. As mentioned above, since the surface layer of the steel wire rod receives strong rolling force during rolling, the spheroidization of cementite may also be carried out smoothly. However, in the present disclosure, cementite in the central portion with reference to the diameter of the steel wire rod, in the area of 1/4 point-1/2 point from the surface with reference to the diameter, for example, may be sufficiently spheroidized, such that the average aspect ratio of cementite in the central portion of the steel wire rod may be 2.5 or less. Also, the steel wire rod of the present invention may have tensile strength of 540 MPa or less after the spheroidization heat treatment is performed once, and accordingly, cold-rolling or cold-forging processing for manufacturing a final product may be easily performed.

In the description below, a method of manufacturing a steel wire rod having excellent spheroidizing heat treatment properties according to an embodiment of the present invention will be described.

First, a billet having the alloy composition described above is heated at 950-1050°C. When the billet heating temperature is less than 950°C, rollability may decrease, and when the billet heating temperature exceeds 1050°C, rapid cooling may be necessary for rolling, such that it may be difficult to control the cooling and cracks may be created, and accordingly, it may be difficult to ensure good product quality.

The heating time during the heating may be preferably 90 minutes or less. When the heating time exceeds 90 minutes, a depth of a surface decarburization layer may increase, such that the decarburization layer may remain after the rolling is completed.

Thereafter, the heated billet is finishing hot-rolled at 730°C-Ae3 in a deformation amount (ε) of 0.3-2.0, thereby obtaining a steel wire rod. A rate of rolling the steel wire rod may be extremely high and may belong to a dynamic recrystallization area. Research results up to date have indicated that an austenite grain size may depend only on a deformation rate and a deformation temperature under dynamic recrystallization conditions. Due to characteristics of wire rod rolling, when a wire diameter is determined, the amount of deformation and the deformation rate may be determined, and the austenite grain size may be changed by adjusting the deformation temperature. In the present disclosure, during dynamic recrystallization, grains may be refined using a dynamic deformation organic transformation phenomenon. To secure the microstructure grains to be obtained in the present invention using the phenomenon, the finishing rolling temperature is controlled to be 730°C-Ae3. When the finish rolling temperature exceeds Ae3, it may be difficult to obtain microstructure grains to be obtained in the present disclosure such that it may be difficult to obtain sufficient spheroidizing heat treatment properties. When the temperature is less than 730°C, equipment load may increase such that equipment lifespan may be rapidly reduced. Also, when the amount of deformation (ε) is less than 0.3, reduction amount may be not sufficient, such that it may be difficult to sufficiently refine the microstructure in the central region of the steel rod wire, and spheroidization heat treatment properties of the steel rod wire obtained therefrom may degrade. When the amount exceeds 2.0, equipment lifespan may rapidly degrade due to degradation of productivity and equipment bearing breakage, caused by rolling load.

Before the finish hot-rolling, preferably, the average austenite grain size of the billet may be 5-20 µm. Ferrite may be known to nucleate at an austenite grain boundary and may grow. When austenite grains, a base phase, are fine, ferrite nucleating at grain boundaries may also start to be finely formed, such that, by controlling the average austenite grain size of the billet before the finish hot-rolling as described above, the ferrite grain refinement effect may be obtained. When the austenite grain average size exceeds 20 µm, it may be difficult to obtain a ferrite grain refining effect, and to obtain an average austenite grain size of less than 5 µm, a separate facility to additionally apply a high amount of deformation such as strong reduction may be necessary, which may be disadvantageous.

Thereafter, the steel rod wire is cooled to 2°C/sec or less to a temperature of Ae1 or less. When a rate of cooling the steel wire rod exceeds 2°C/sec, a low-temperature structure such as bainite may be generated in the fine segregation portion of the steel wire rod. In the fine segregation portion, segregation of twice or more than the average of the steel wire rod may be formed, and accordingly, a low-temperature structure may be generated even at a low cooling rate, which may adversely affect the structure homogenization of the steel. The rate of cooling the steel wire rod may be more preferably 0.5-2°C/sec in terms of refinement of grains of the microstructure.

In the present invention, a spheroidizing heat treatment in which the steel wire rod may be heated to Ae1-Ae1+40°C, may be maintained for 10-15 hours, and may be cooled to 660°C at 20°C/hr or less may be further included after the cooling. When the heating temperature is less than Ae1, there may be a disadvantage in that the spheroidizing heat treatment time may be prolonged, and when the temperature exceeds Ae1+40°C, the spheroidizing carbide seeds may be reduced, such that the spheroidizing heat treatment effect may not be sufficient. When the maintaining time is less than 10 hours, spheroidizing heat treatment may be not sufficiently performed, such that the aspect ratio of cementite may increase, which may be disadvantageous. When the cooling rate exceeds 20°C/hr, there may be a disadvantage in that pearlite may be formed again due to the high cooling rate. As mentioned above, in the present disclosure, even when only the spheroidizing heat treatment is performed without the primary soft softening heat treatment and the primary wire drawing, sufficient spheroidizing heat treatment properties may be secured.

### [Best Mode for Invention]

Hereinafter, the present invention will be described in more detail through examples. However, it should be noted that the following examples are for illustrative purposes only and are not intended to limit the scope of the present invention

### (Embodiment)

A billet having an alloy composition as in Table 1 below was prepared, a steel wire rod having a diameter of 9mm was manufactured using the conditions described in Table 2 below. With respect to the steel wire rod prepared as above, a microstructure, an average grain size of proeutectoid ferrite, an average size of colony of pearlite, an average size of a long axis of cementite in the pearlite colony, and tensile strength were measured, and the results are listed in Table 3 below. Also, spheroidization heat treatment was performed on the steel wire rod once under the conditions as in Table 4 below, an average aspect ratio of cementite and tensile strength were measured, and the results are listed in Table 4 below. In this case, the spheroidizing heat treatment was performed without performing the primary softening treatment and the primary wire drawing process on a sample of the steel wire rod manufactured described above.

The austenite grain average size (AGS) was measured through a cutting crop performed before finishing hot-rolling.

Ae1 and Ae3 displayed values calculated using JmatPro, a commercial program.

As for an average grain size (FGS) of proeutectoid ferrite, the steel rod wire was rolled using a ASTM E112 method, a non-water cooling portion was removed, and 3 arbitrary points in the area of 2/5 point-3/5 point from the diameter of the obtained sample were measured, and an average value thereof was calculated.

As for the average size of colonies of pearlite, 10 arbitrary pearlite colonies were selected from the same point as in the FGS measurement using an ASTM E112 method, a (long axis + short axis)/2 value of each colony was obtained, and an average value of colony sizes was obtained.

As for the average aspect ratio of cementite after the spheroidization heat treatment, 3 fields of view of 2000 times SEM of 1/4-1/2 point was imaged in a direction of a diameter of the steel rod wire, and a long axis/short axis of cementite in the field of view were automatically measured using an image measurement program, and was statistically processed.

**[Table 1]**

| Classif ication | Alloy composition (weight%) | | | | | | |
|---|---|---|---|---|---|---|---|
| | C | Si | Mn | Cr | Al | Mo | N |
| Inventi ve steel 1 | 0.25 | 0.3 | 1.3 | 1 | 0.032 | 0.2 | 0.085 |
| Inventi ve steel 2 | 0.35 | 0.3 | 1.3 | 0.9 | 0.028 | 0.3 | 0.062 |
| Compara tive steel 1 | 0.4 | 0.2 | 1.2 | 1.1 | 0.042 | 0.7 | 0.050 |
| Compara tive steel 2 | 0.72 | 0.3 | 0.8 | 0.8 | 0.035 | 0.7 | 0.058 |
| Inventi ve steel 3 | 0.35 | 0.2 | 0.7 | 1 | 0.031 | 0.2 | 0.068 |
| Inventi ve steel 4 | 0.4 | 0.25 | 0.8 | 0.9 | 0.036 | 0.15 | 0.071 |
| Inventi ve steel 5 | 0.35 | 0.3 | 1.2 | 1.1 | 0.034 | 0.2 | 0.069 |
| Inventi ve steel 6 | 0.35 | 0.18 | 1.2 | 1.15 | 0.035 | 0.3 | 0.072 |
| Inventi ve steel 7 | 0.3 | 0.15 | 1.4 | 0.8 | 0.028 | 0.3 | 0.080 |

**[Table 2]**

| Class ifica tion | Steel type No. | Heati ng tempe ratur e (°C) | Heati ng time (min) | Ae3 (°C) | Finis hing rolli ng tempe ratur e (°C) | Defor matio n amoun t | Ae1 (°C) | Cooli ng stop tempe ratur e (°C) | Cooli ng rate (°C/s ) |
|---|---|---|---|---|---|---|---|---|---|
| Compa rativ e examp le 1 | Inven tive steel 1 | 1000 | 90 | 790 | 900 | 0.2 | 715 | 732 | 5 |
| Compa rativ e examp le 2 | Inven tive steel 2 | 1150 | 120 | 775 | 800 | 0.1 | 715 | 721 | 1.5 |
| Compa rativ e examp le 3 | Compa rativ e steel 1 | 1020 | 90 | 770 | 780 | 0.9 | 720 | 735 | 2 |
| Compa rativ e examp le 4 | Compa rativ e steel 2 | 1000 | 90 | 745 | 750 | 0.6 | 730 | 740 | 5 |
| ref. examp le 1 | Inven tive steel 3 | 950 | 90 | 785 | 760 | 1.2 | 735 | 729 | 2 |
| ref. examp le 2 | Inven tive steel 4 | 1000 | 80 | 775 | 750 | 0.8 | 730 | 715 | 1 |
| ref. examp le 3 | Inven tive steel 5 | 1020 | 90 | 775 | 730 | 0.6 | 720 | 701 | 1 |
| ref. examp le 4 | Inven tive steel 6 | 990 | 90 | 770 | 760 | 0.8 | 721 | 691 | 1.5 |
| ref. examp le 5 | Inven tive steel 7 | 1020 | 90 | 780 | 750 | 1.0 | 704 | 658 | 2 |

**[Table 3]**

| Classification | Microstructure (area%) | | | | Pearlite colony average size (µm) | Proeutectoid ferri te grain average size (µm) | Cementite long axis average in pearlite colony (µm) | Tensile stren gth (MPa) |
|---|---|---|---|---|---|---|---|---|
| | Equili brium phase F | F | P | B+M | | | | |
| Compa rativ e examp le 1 | 70 | 10 | 10 | 80 | 10 | 10 | 9 | 820 |
| Compa rativ e examp le 2 | 55 | 14 | 71 | 15 | 13 | 12 | 11 | 850 |
| Compa rativ e examp le 3 | 45 | 12 | 63 | 25 | 12 | 15 | 10 | 900 |
| Compa rativ e examp le 4 | 5 | 3 | 50 | 47 | 15 | 8 | 15 | 1030 |
| ref. examp le 1 | 45 | 40 | 55 | 5 | 3 | 3 | 3.5 | 770 |
| ref. examp le 2 | 41 | 38 | 57 | 5 | 3 | 4 | 3.4 | 740 |
| ref . examp le 3 | 46 | 39 | 61 | 0 | 5 | 6 | 4.3 | 720 |
| ref. examp le 4 | 47 | 41 | 56 | 3 | 3.2 | 2.8 | 3 | 760 |
| ref. examp le 5 | 49 | 40 | 58 | 2 | 4.2 | 4.5 | 4 | 750 |
| F: proeutectoid ferrite, P: pearlite, B: bainite, M: martensite | | | | | | | | |

**[Table 4]**

| Classification | Heating tempera ture (°C) | Heating time (Hr) | Cooling rate to 660°C (°C/Hr) | Cementite average aspect ratio after spheroidizat ion heat treatment | Tensile strength after spheroidiza tion heat treatment (MPa) |
|---|---|---|---|---|---|
| Compara tive example 1 | 750 | 10 | 30 | 8.5 | 581 |
| Compara tive example 2 | 740 | 11 | 20 | 6.2 | 612 |
| Compara tive example 3 | 700 | 12 | 15 | 7.5 | 595 |
| Compara tive example 4 | 745 | 14 | 25 | 5.5 | 643 |
| ref. example 1 | 750 | 13 | 15 | 2 | 512 |
| ref. example 2 | 745 | 12 | 17 | 2.1 | 520 |
| ref. example 3 | 755 | 13 | 10 | 1.5 | 502 |
| ref. example 4 | 750 | 15 | 13 | 1.4 | 508 |
| ref. example 5 | 760 | 14 | 15 | 1.3 | 493 |

As indicated in Tables 1 to 4 above, in reference examples 1 to 5 satisfying the alloy composition and manufacturing conditions suggested in the present disclosure, the microstructure type and the fraction of the present disclosure and also fine grains were secured, such that, with only the spheroidization heat treatment performed once, the average aspect ratio of cementite was less than 2.5.

However, in Comparative Examples 1 to 4 which did not satisfy the alloy composition or manufacturing conditions suggested in the present disclosure, it is indicated that the microstructure type and the fraction of the present disclosure were not satisfied, or fine grains were not secured, such that the cementite average aspect ratio was relatively high when the spheroidization heat treatment was performed once, and accordingly, to be applied to a final product, additional spheroidization heat treatment may be necessary.

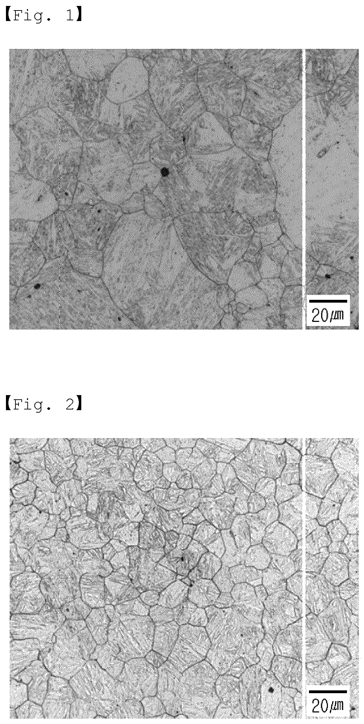

FIG. 1 is an image of a microstructure before finishing hot-rolling in comparative example 1, obtained using an optical microscope. FIG. 2 is an image of a microstructure before finishing hot-rolling in reference example 1, obtained using an optical microscope. As indicated in FIGS. 1 and 2, the AGS before the finishing hot-rolling was relatively fine in reference Example 1 as compared to Comparative Example 1.

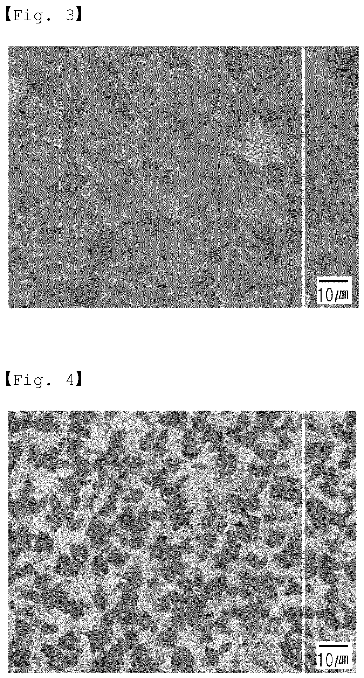

FIG. 3 is an image of a microstructure after rolling and cooling in comparative example 1, obtained using an SEM. FIG. 4 is an image of a microstructure after rolling and cooling in reference example 1, obtained using an SEM. As indicated in FIGS. 3 and 4, the microstructure of reference Example 1 was refined after rolling and cooling, and the cementite was segmented, as compared to Comparative Example 1.

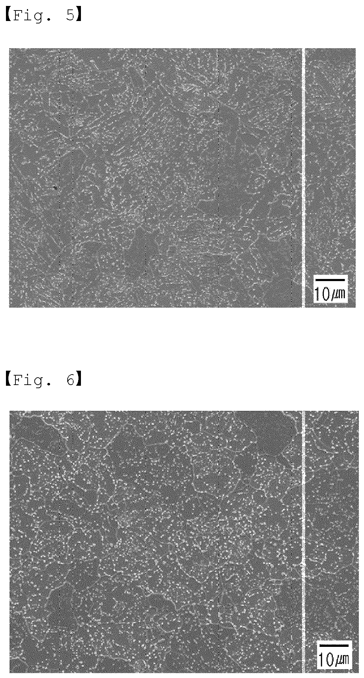

FIG. 5 is an image of a microstructure after spheroidizing heat treatment in comparative example 1, obtained using an SEM. FIG. 6 is an image of a microstructure after spheroidizing heat treatment in reference example 1, obtained using an SEM. As indicated in FIGS. 5 and 6, the microstructure of reference Example 1 was more spheroidized after the spheroidizing heat treatment as compared to Comparative Example 1.

## Claims

1. A steel wire rod enabling omission of softening heat treatment, the steel wire rod comprising:
by weight%, 0.2-0.45% of C, 0.02-0.4% of Si, 0.3-1.5% of Mn, 0.01-1.5% of Cr, 0.02-0.05% of Al, 0.01-0.5% of Mo, 0.01% or less of N, and a balance Fe and other inevitable impurities,
wherein a microstructure has a main phase of a composite structure of proeutectoid ferrite+perlite, and includes 10 area% or less (including 0%) of one or more of bainite or martensite, and
wherein an average colony size of pearlite is 5 µm or less, and
wherein a fraction of proeutectoid ferrite is 80% or more of an equilibrium phase; whereby the average colony size of pearlite is measured and the fraction of proeutectoid ferrite of an equilibrium phase is determined as specified in the description.

2. The steel wire rod of claim 1, wherein, in the steel wire rod, an average grain size of proeutectoid ferrite is 7 µm or less; whereby the average grain size of proeutectoid ferrite is measured as specified in the description.

3. The steel wire rod of claim 1, wherein, in the steel wire rod, an average size of a long axis of cementite in pearlite colony is 5 µm or less.

4. The steel wire rod of claim 1, wherein the steel wire rod has tensile strength of 800 MPa or less.

5. The steel wire rod of claim 1, wherein, in the steel wire rod, an average aspect ratio of cementite is 2.5 or less after a spheroidization heat treatment is performed once; whereby the average aspect ratio of cementite is measured as specified in the description.

6. The steel wire rod of claim 1, wherein the steel wire rod has tensile strength of 540 MPa or less after a spheroidization heat treatment is performed once.

7. A method of manufacturing a steel wire rod enabling omission of softening heat treatment, the method comprising:
heating a billet including, by weight%, 0.2-0.45% of C, 0.02-0.4% of Si, 0.3-1.5% of Mn, 0.01-1.5% of Cr, 0.02-0.05% of Al, 0.01-0.5% of Mo, 0.01% or less of N, and a balance Fe and other inevitable impurities, at 950-1050°C;
obtaining a steel wire rod by finishing hot-rolling the heated billet in a deformation amount of 0.3-2.0 at 730°C-Ae3; and
cooling the steel wire rod to a temperature of Ae1 or less at 2°C/sec or less.

8. The method of claim 7, wherein a heating time in the heating is 90 minutes or less.

9. The method of claim 7, wherein, before the finishing hot-rolling, an average grain size of austenite of the billet 5-20 µm; whereby the average grain size of austenite of the billet is determined as specified in the description.

10. The method of claim 7, wherein the method further includes a spheroidizing annealing heat treatment in which the steel wire rod is heated to Ae1-Ae1+40°C, is maintained for 10-15 hours, and is cooled to 660°C at 20°C/hr or less, after the cooling.

## Patentansprüche

1. Walzdraht aus Stahl, der eine Weichglühbehandlung überflüssig macht, wobei der Walzdraht aus Stahl Folgendes umfasst:
in Gew.-%, 0,2-0,45 % C, 0,02-0,4 % Si, 0,3-1,5 % Mn, 0,01-1,5 % Cr, 0,02-0,05 % Al, 0,01-0,5 % Mo, 0,01 % oder weniger N und einen Rest Fe und andere unvermeidbare Verunreinigungen,
wobei eine Mikrostruktur eine Hauptphase einer Verbundstruktur aus proeutektoidem Ferrit+Perlit aufweist und 10 Flächenprozent oder weniger (einschließlich 0 %) von einem oder mehreren von Bainit oder Martensit beinhaltet und
wobei eine durchschnittliche Koloniegröße von Perlit 5 µm oder weniger beträgt und
wobei eine Fraktion von proeutektoidem Ferrit 80 % oder mehr einer Gleichgewichtsphase beträgt; wobei die durchschnittliche Koloniegröße von Perlit gemessen wird und die Fraktion von proeutektoidem Ferrit einer Gleichgewichtsphase, wie in der Beschreibung spezifiziert, bestimmt wird.

2. Walzdraht aus Stahl nach Anspruch 1, wobei in dem Walzdraht aus Stahl eine durchschnittliche Korngröße von proeutektoidem Ferrit 7 µm oder weniger beträgt; wobei die durchschnittliche Korngröße von proeutektoidem Ferrit, wie in der Beschreibung spezifiziert, gemessen wird.

3. Walzdraht aus Stahl nach Anspruch 1, wobei in dem Walzdraht aus Stahl eine durchschnittliche Größe einer Längsachse von Zementit in der Perlitkolonie 5 µm oder weniger beträgt.

4. Walzdraht aus Stahl nach Anspruch 1, wobei der Walzdraht aus Stahl eine Zugfestigkeit von 800 MPa oder weniger aufweist.

5. Walzdraht aus Stahl nach Anspruch 1, wobei in dem Walzdraht aus Stahl ein durchschnittliches Seitenverhältnis von Zementit 2,5 oder weniger beträgt, nachdem eine Wärmebehandlung durch Sphäroidisierung einmalig durchgeführt wurde; wobei das durchschnittliche Seitenverhältnis von Zementit, wie in der Beschreibung spezifiziert, gemessen wird.

6. Walzdraht aus Stahl nach Anspruch 1, wobei der Walzdraht aus Stahl eine Zugfestigkeit von 540 MPa oder weniger aufweist, nachdem eine Wärmebehandlung durch Sphäroidisierung einmalig durchgeführt wurde.

7. Verfahren zum Herstellen eines Walzdrahts aus Stahl, der eine Weichglühbehandlung überflüssig macht, wobei das Verfahren Folgendes umfasst:
Erwärmen eines Knüppels, der, in Gew.-%, 0,2-0,45 % C, 0,02-0,4 % Si, 0,3-1,5 % Mn, 0,01-1,5 % Cr, 0,02-0,05 % Al, 0,01-0,5 % Mo, 0,01 % oder weniger N und einen Rest Fe und andere unvermeidbare Verunreinigungen beinhaltet, bei 950-1.050 °C;
Erhalten eines Walzdrahts aus Stahl durch Abschließen von Warmwalzen des erwärmten Knüppels in einem Verformungsausmaß von 0,3-2,0 bei 730 °C Ae3; und
Abkühlen des Walzdrahts aus Stahl auf eine Temperatur von Ae1 oder weniger bei 2 °C/s oder weniger.

8. Verfahren nach Anspruch 7, wobei eine Erwärmungszeit beim Erwärmen 90 Minuten oder weniger beträgt.

9. Verfahren nach Anspruch 7, wobei vor dem Abschließen des Warmwalzens eine durchschnittliche Korngröße von Austenit des Knüppels 5-20 µm beträgt; wodurch die durchschnittliche Korngröße von Austenit des Knüppels, wie in der Beschreibung spezifiziert, bestimmt wird.

10. Verfahren nach Anspruch 7, wobei das Verfahren ferner eine Wärmebehandlung durch sphäroidisierendes Glühen beinhaltet, bei der der Walzdraht aus Stahl nach dem Abkühlen auf Ae1-Ae1+40 °C erwärmt wird, für 10-15 Stunden gehalten wird und auf 660 °C bei 20°C/h oder weniger abgekühlt wird.

## Revendications

1. Fil machine en acier permettant d'omettre un traitement thermique d'adoucissement, le fil machine en acier comprenant :
en % en poids, 0,2 à 0,45 % de C, 0,02 à 0,4 % de Si, 0,3 à 1,5 % de Mn, 0,01 à 1,5 % de Cr, 0,02 à 0,05 % d'Al, 0,01 à 0,5 % de Mo, 0,01 % ou moins de N, et un reste de du Fe et d'autres impuretés inévitables,
dans lequel une microstructure a une phase principale d'une structure composite de ferrite proeutectoïde + perlite, et inclut 10 % d'aire ou moins (y compris 0 %) d'une ou de plusieurs parmi de la bainite ou de la martensite, et
dans lequel une taille moyenne de colonie de perlite est de 5 µm ou moins, et
dans lequel une fraction de ferrite proeutectoïde représente 80 % ou plus d'une phase d'équilibre ; moyennant quoi la taille moyenne de colonie de perlite est mesurée et la fraction de ferrite proeutectoïde d'une phase d'équilibre est déterminée comme spécifié dans la description.

2. Fil machine en acier selon la revendication 1, dans lequel, dans le fil machine en acier, une taille moyenne des grains de ferrite proeutectoïde est de 7 µm ou moins ; moyennant quoi la taille moyenne des grains de ferrite proeutectoïde est mesurée comme spécifié dans la description.

3. Fil machine en acier selon la revendication 1, dans lequel, dans le fil machine en acier, une taille moyenne d'un axe long de la cémentite dans une colonie de perlite est de 5 µm ou moins.

4. Fil machine en acier selon la revendication 1, dans lequel le fil machine en acier a une résistance à la traction de 800 MPa ou moins.

5. Fil machine en acier selon la revendication 1, dans lequel, dans le fil machine en acier, un rapport d'aspect moyen de la cémentite est de 2,5 ou moins après qu'un traitement thermique de sphéroïdisation est effectué une fois ; moyennant quoi le rapport d'aspect moyen de la cémentite est mesuré comme spécifié dans la description.

6. Fil machine en acier selon la revendication 1, dans lequel le fil machine en acier a une résistance à la traction de 540 MPa ou moins après qu'un traitement thermique de sphéroïdisation est effectué une fois.

7. Procédé de fabrication d'un fil machine en acier permettant d'omettre un traitement thermique d'adoucissement, le procédé comprenant :
le chauffage d'une billette incluant, en % en poids, 0,2 à 0,45 % de C, 0,02 à 0,4 % de Si, 0,3 à 1,5 % de Mn, 0,01 à 1,5 % de Cr, 0,02 à 0,05 % d'Al, 0,01 à 0,5 % de Mo, 0,01 % ou moins de N, et un reste de Fe et d'autres impuretés inévitables, à 950 à 1050 °C ;
l'obtention d'un fil machine en acier par laminage à chaud de finition de la billette chauffée avec un taux de déformation de 0,3 à 2,0 à 730 °C - Ae3 ; et
le refroidissement du fil machine en acier à une température de Ae1 ou moins à 2 °C/s ou moins.

8. Procédé selon la revendication 7, dans lequel un temps de chauffage lors du chauffage est de 90 minutes ou moins.

9. Procédé selon la revendication 7, dans lequel, avant le laminage à chaud de finition, une taille moyenne des grains d'austénite de la billette est de 5 à 20 µm ; moyennant quoi la taille moyenne des grains d'austénite de la billette est déterminée comme spécifié dans la description.

10. Procédé selon la revendication 7, dans lequel le procédé inclut en outre un traitement thermique de recuit de sphéroïdisation dans lequel le fil machine en acier est chauffé à Ae1 - Ae1 + 40 °C, est maintenu pendant 10 à 15 heures, et est refroidi jusqu'à 660 °C à 20 °C/h ou moins, après le refroidissement.
